# EUROPÄISCHE PATENTANMELDUNG

(11) **EP 3 633 248 A1**
(43) Veröffentlichungstag der Anmeldung: **08.04.2020**
(21) Anmeldenummer: 18198346.1
(22) Anmeldetag: 02.10.2018
(51) Int. Cl.: F16K 1/22, F02D 9/04, F02D 9/10, F16K 31/04, F16K 31/08

(54) **VENTIL ZUR STEUERUNG VON ABGAS ODER FRISCHLUFT IN EINER ANTRIEBSEINHEIT**

(71) Anmelder: Continental Automotive GmbH, 30165 Hannover (DE)
(72) Erfinder: Aronet, Vlad, 325300 Bocsa, Caras-Severin (RO)

(57) **Zusammenfassung**

Ein Ventil (7) hat ein in einem Antriebsgehäuse (13) befestigten, als Polymagneten ausgebildeten Magneten (19) mit mehreren Einzelmagneten (20) und zumindest ein auf einem Zahnrad (16) befestigtes magnetisches Bauteil (18). Der Magnet (19) steht dem magnetischen Bauteil (18) mit mehreren Nordpolen (N) und Südpolen (S) gegenüber. Hierdurch übt der Magnet (19) nur dann eine Kraft auf das magnetische Bauteil (18) aus, wenn es dem Magneten (19) unmittelbar gegenübersteht. Ein Drehimpuls auf das Zahnrad (16) wird hierdurch vermieden.

## Beschreibung

Die Erfindung betrifft ein Ventil zur Steuerung von Abgas oder Frischluft in einer Antriebseinheit eines Kraftfahrzeuges oder Generators mit einem einen Kanal aufweisenden Ventilgehäuse, mit einem auf einer Antriebswelle befestigten Ventilkörper zum Freigeben oder Verschließen eines Strömungsquerschnitts des Kanals und mit einem Antrieb zur Bewegung der Antriebswelle, und mit einer Halteeinrichtung zur Halterung des Ventilkörpers in einer vorgesehenen Stellung.

Solche Ventile werden beispielsweise in Drosselklappenstutzen oder Abgasklappen zur Steuerung von Abgas oder Frischluft bei Brennkraftmaschinen oder Brennstoffzellen heutiger Kraftfahrzeuge häufig eingesetzt und sind aus der Praxis bekannt. Der Ventilkörper wird von dem Antrieb zwischen einer den Kanal vollständig öffnenden Stellung und einer vollständig schließenden Stellung angetrieben. Um bei Ausfall des Antriebs des Ventilkörpers die Antriebseinheit weiter betreiben zu können, ist es wünschenswert, wenn das Ventil eine Grundstellung hat, in der der Ventilkörper in einer vorgesehenen Position gehalten ist. Damit wird entweder ein so genannter Fail Safe Betrieb ermöglicht oder die Öffnung des Kanals auf einen vorgesehenen Wert begrenzt.

Man könnte daran denken, den Ventilkörper mittels einer Rückstellfeder in eine Grundstellung vorzuspannen. Nachteilig hierbei ist jedoch, dass die Rückstellfeder Kräfte in Stellrichtung des Ventilkörpers einleitet. Damit ist die Stellung des Ventilkörpers abhängig von der Federkraft der Rückstellfeder. Zudem muss im Normalbetrieb der Antrieb des Ventilkörpers gegen die Kraft der Rückstellfeder antreiben, was zu einem erhöhten Energieaufwand und zu einem erhöhten Verschleiß des Antriebs des Ventilkörpers führt.

Der Erfindung liegt das Problem zugrunde, ein Ventil der eingangs genannten Art so weiter zu bilden, dass es bei Ausfall des Antriebs des Ventilkörpers eine zuverlässige Abstützung in einer vorgesehenen Position ermöglicht.

Dieses Problem wird erfindungsgemäß dadurch gelöst, dass die Halteeinrichtung einen Magneten und ein dem Magneten gegenüberstehendes magnetisches Bauteil hat, wobei der Magnet oder das gegenüberstehende Bauteil feststehend angeordnet und das jeweils andere Bauteil mit dem Ventilkörper in Verbindung steht.

Von dem Magneten erzeugte Feldlinien lassen sich gemäß einer vorteilhaften Weiterbildung der Erfindung besonders kurz gestalten, wenn der Magnet mit dem Nordpol und zugleich dem Südpol dem magnetischen Bauteil gegenübersteht. Durch diese Gestaltung gelangt das magnetische Bauteil erst dann in den Bereich der Feldlinien des Magneten, wenn die beiden Bauteile einander gegenüberstehen. Das magnetische Feld ist dank der Erfindung auf einen kleinen Raum begrenzt. Ein Anziehen des magnetischen Bauteils durch den Magneten von einer größeren Entfernung wird daher vermieden. Damit erzeugt der Magnet auch kein auf die Antriebswelle einwirkendes Drehmoment oder Rückstellmoment. Die Halteposition des Ventilkörpers lässt sich zudem besonders genau festlegen.

Besonders kurze Feldlinien lassen sich gemäß einer anderen vorteilhaften Weiterbildung der Erfindung erzeugen, wenn der Magnet als Polymagnet mit mehreren Einzelmagneten ausgebildet ist. Solche Polymagneten haben eine Vielzahl von Einzelmagneten mit benachbarten Nord- und Südpolen und damit ein besonders eng begrenztes magnetisches Feld.

Eine von der Masse des Magneten erzeugte Trägheit beim Antrieb der Antriebswelle lässt sich gemäß einer anderen vorteilhaften Weiterbildung der Erfindung einfach vermeiden, wenn der Magnet in einem Antriebsgehäuse und das dem Magneten gegenüberstehende magnetische Bauteil in einem mit der Antriebswelle mitbewegten Bauteil befestigt ist.

Die Anzahl an Bauteilen des Ventils lässt sich gemäß einer anderen vorteilhaften Weiterbildung der Erfindung besonders gering halten, wenn das das magnetische Bauteil an einem Zahnrad eines zwischen Antrieb und Antriebswelle angeordneten Getriebes befestigt ist. Da das Zahnrad zum Antrieb der Antriebswelle ohnehin vorhanden ist, gestaltet sich das Ventil zudem konstruktiv besonders einfach.

Das Ventil gestaltet sich gemäß einer anderen vorteilhaften Weiterbildung der Erfindung besonders kostengünstig, wenn das Zahnrad des Getriebes aus Kunststoff gefertigt ist.

Zur weiteren Verringerung der Fertigungskosten des Ventils trägt es gemäß einer anderen vorteilhaften Weiterbildung der Erfindung bei, wenn das magnetische Bauteil stoffschlüssig in dem Zahnrad befestigt ist. Insbesondere in Kombination mit dem aus Kunststoff gefertigten Zahnrad des Getriebes zur Aufnahme des magnetischen Bauteils führt die stoffschlüssige Verbindung zu einer besonders einfachen Fertigung des Ventils. Das magnetische Bauteil kann hierdurch von dem Kunststoff des Zahnrades umspritzt sein. Damit ist das magnetische Bauteil dauerhaft befestigt und besonders genau positioniert.

Das Ventil gestaltet sich gemäß einer anderen vorteilhaften Weiterbildung der Erfindung konstruktiv besonders einfach, wenn das magnetische Bauteil ein Stahlblech ist.

Der Ventilkörper lässt sich in zwei unterschiedlichen Stellungen von der Halteeinrichtung haltern, wenn dem Magneten zwei voneinander beabstandete magnetische Bauteile gegenüberstehen. Durch diese Gestaltung lässt sich beispielsweise eine Fail-Save Stellung, in der die Antriebseinheit in einem Notprogramm weiter betrieben werden kann, und eine davon abweichende Grundstellung, in der beispielsweise der Kanal verschlossen ist, erzeugen.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: schematisch einen Teilbereich eines Kraftfahrzeuges mit einer Antriebsmaschine und einem Ventil,
- Fig.2: vergrößert das Ventil aus Figur 1 in einer perspektivischen Darstellung,
- Fig.3: einen Längsschnitt durch einen Teilbereich des Ventils aus Figur 2 entlang der Linie III - III,
- Fig.4: eine Schnittdarstellung durch einen Teilbereich eines Getriebes des Ventils aus Figur 3 entlang der Linie IV-IV,
- Fig.5: eine Schnittdarstellung durch einen Teilbereich eines Getriebes des Ventils aus Figur 3 entlang der Linie V-V.

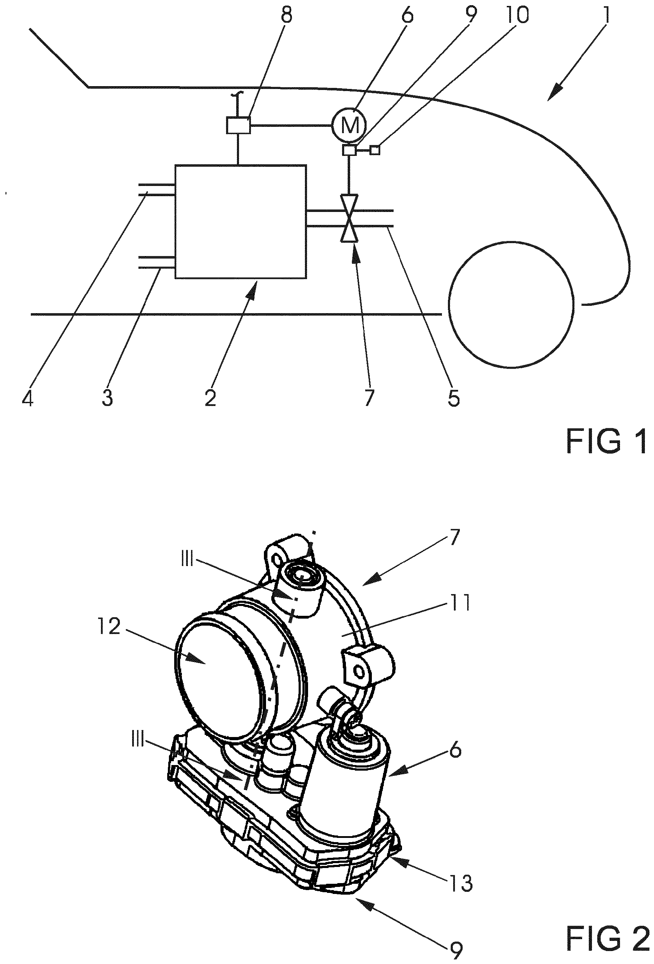

Figur 1 zeigt schematisch einen Teilbereich eines Kraftfahrzeuges 1 mit einer eine Antriebsmaschine 2 aufweisenden Antriebseinheit. Die Antriebsmaschine 2 kann das Kraftfahrzeug als Brennkraftmaschine mechanisch oder als Brennstoffzelle elektrisch antreiben. Die Antriebseinheit hat zwei Zuführkanäle 3, 4 für Brennstoff, beispielsweise gasförmigen Brennstoff, und für Frischluft und einen Abgaskanal 5. Bei der Antriebsmaschine 2 kann es sich beispielsweise um eine Brennstoffzelle oder um eine Brennkraftmaschine handeln. In dem Abgaskanal 5 ist ein von einem elektromotorischen Antrieb 6 ansteuerbares Ventil 7 angeordnet.

In einer nicht dargestellten Ausführungsform kann das Ventil 7 auch in dem Frischluft führenden oder Brennstoff führenden Zuführkanal 3, 4 angeordnet sein.

Von der Antriebsmaschine 2 erzeugter elektrischer Strom wird einer Steuereinrichtung 8 zugeführt. Die Steuereinrichtung 8 ist mit einem nicht dargestellten Bordnetz des Kraftfahrzeuges verbunden. Der elektromotorische Antrieb 6 des Ventils 7 wird über die Steuereinrichtung 8 mit elektrischem Strom versorgt. Zwischen dem Ventil 7 und dem elektromotorischen Antrieb 6 ist ein Getriebe 9 mit einem Positionssensor 10 angeordnet. Der Positionssensor 10 erfasst die Stellung und damit die Funktion des Ventils 7.

Figur 2 zeigt vergrößert das Ventil 7 aus Figur 1 in einer perspektivischen Darstellung. Das Ventil 7 hat ein Ventilgehäuse 11 mit einem Kanal 12. An dem Ventilgehäuse 11 ist ein Antriebsgehäuse 13 mit dem elektromotorischen Antrieb 6 befestigt. Das in Figur 1 schematisch dargestellte Getriebe 9 ist ebenfalls in dem Antriebsgehäuse 13 angeordnet.

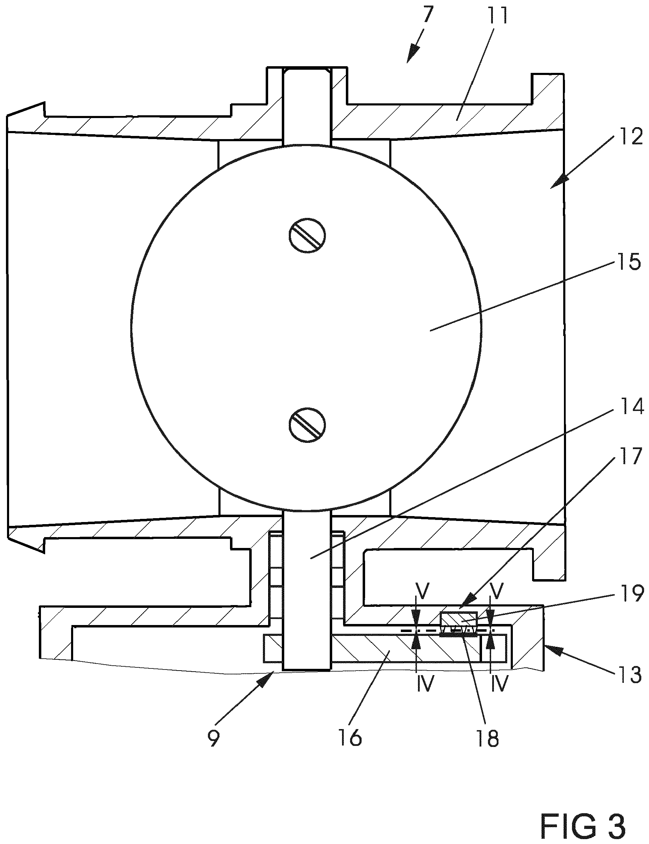

Figur 3 zeigt eine Schnittdarstellung durch das Ventilgehäuse 11 des Ventils 7 aus Figur 2 mit angrenzenden Bereichen des Antriebsgehäuses 13 entlang der Linie III - III. Das Ventil 7 hat eine von dem elektromotorischen Antrieb 6 verschwenkbare Antriebswelle 14 mit einem darauf angeordneten scheibenförmigen Ventilkörper 15. Der Ventilkörper 15 ist auf der Antriebswelle 14 befestigt. Durch eine Verschwenkung der Antriebswelle 14 wird damit der Strömungsquerschnitt des Kanals 12 freigegeben oder ganz oder teilweise verschlossen. Das Getriebe 9 hat ein auf der Antriebswelle 14 aufgepresstes, als Teilzahnrad ausgebildetes Zahnrad 16. Das Zahnrad 16 hat eine mit dem Antriebsgehäuse 13 zusammenwirkende Halteeinrichtung 17.

Die Halteeinrichtung 17 hat ein auf dem Zahnrad 16 befestigtes magnetisches Bauteil 18 und ein in dem Antriebsgehäuse 13 befestigten Magneten 19. Das Zahnrad 16 ist aus nicht magnetischem Kunststoff gefertigt. Das magnetische Bauteil 18 ist im Verhältnis zu den Abmessungen des Zahnrades 16 sehr klein. Beim Verschwenken des von dem in Figur 1 dargestellten elektromotorischen Antrieb 6 angetriebenen Zahnrades 16 und damit des Ventilkörpers 15 wird das magnetische Bauteil 18 gegenüber dem feststehenden Magneten 19 verschwenkt. Steht das magnetische Bauteil 18 über dem Magneten 19 wird das Zahnrad 16 in dieser Stellung gehalten und kann nur mittels des elektromotorischen Antriebs 6 aus dieser Stellung heraus bewegt werden. Beim Ausfall des elektromotorischen Antriebs 6 wird das Zahnrad 16 und damit der Ventilkörper 15 von dem über dem Magneten 19 befindlichen magnetischen Bauteil 18 gehalten. Dies kann beispielsweise eine Grundstellung des Ventilkörpers 15 sein, in der bei stillstehender Antriebsmaschine 2 der Kanal 12 verschlossen sein soll oder eine so genannte Fail-Save Stellung des Ventilkörpers 15, welche aktiv angefahren wird, um ein Notbetrieb der Antriebsmaschine 2 zu gewährleisten.

In Figur 3 sind von dem Magnet erzeugte Feldlinien angedeutet. Der Magnet ist als Polymagnet ausgebildet und erzeugt daher eine Vielzahl räumlich eng begrenzter Feldlinien.

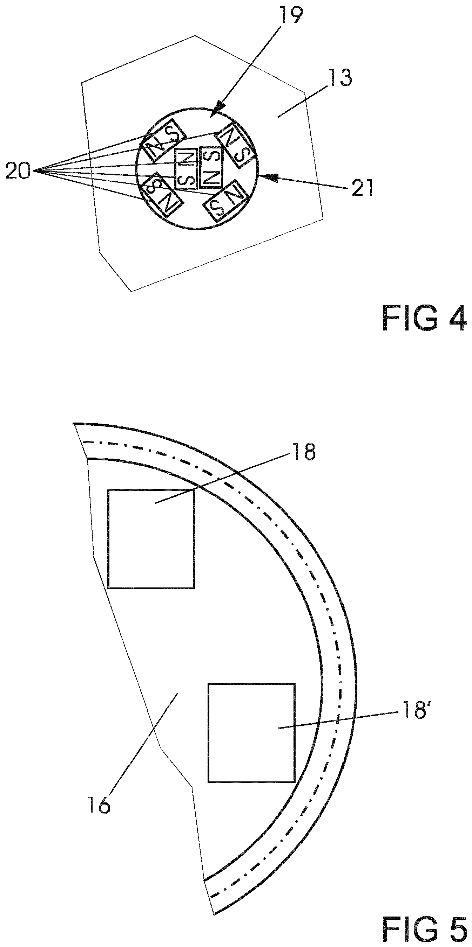

Figur 4 zeigt vergrößert in einer Schnittdarstellung durch das Getriebe 9 im Bereich der Halteeinrichtung 17 entlang der Linie IV - IV aus Figur 3 mit einer Ansicht auf den Magneten 19. Hierbei ist zu erkennen, dass der Magnet 19 eine Vielzahl von Einzelmagneten 20 aufweist und dass die Einzelmagnete 20 jeweils mit einem Nordpol N und einem Südpol S dem in Figur 3 dargestellten magnetischen Bauteil 18 gegenüberstehen. Das Antriebsgehäuse 13 ist aus unmagnetischem Spritzguss, insbesondere Leichtmetallspritzguss, gefertigt und hat eine Ausnehmung 21 zur formschlüssigen Aufnahme des Magneten 19.

Figur 5 zeigt vergrößert in einer Schnittdarstellung durch das Getriebe 9 im Bereich der Halteeinrichtung 17 entlang der Linie V - V aus Figur 3 mit einer Ansicht auf das magnetische Bauteil 18. Hierbei ist zu erkennen, dass das Zahnrad 16 zwei voneinander beabstandet angeordnete magnetische Bauteile 18, 18' hat. Damit lässt sich das Zahnrad 16 und damit der Ventilkörper 15 bei ausbleibendem elektromotorischen Antrieb 6 in zwei unterschiedlichen Stellungen abstützen.

Selbstverständlich kann die Halteeinrichtung 17 in einer alternativen, nicht dargestellten Ausführungsform auch nur ein einziges magnetisches Bauteil 18 aufweisen. Das magnetische Bauteil 18 kann beispielsweise ein Stahlblech sein oder ein Magnet 19 wie in Figur 4 beschrieben.

## Patentansprüche

1. Ventil (7) zur Steuerung von Abgas oder Frischluft in einer Antriebseinheit eines Kraftfahrzeuges oder Generators mit einem einen Kanal (12) aufweisenden Ventilgehäuse (11), mit einem auf einer Antriebswelle (14) befestigten Ventilkörper (15) zum Freigeben oder Verschließen eines Strömungsquerschnitts des Kanals (12) und mit einem Antrieb (6) zur Bewegung der Antriebswelle (14), und mit einer Halteeinrichtung (17) zur Halterung des Ventilkörpers (15) in einer vorgesehenen Stellung, **dadurch gekennzeichnet, dass** die Halteeinrichtung (17) einen Magneten (19) und ein dem Magneten (19) gegenüberstehendes magnetisches Bauteil (18) hat, wobei der Magnet (19) oder das gegenüberstehende Bauteil (18) feststehend angeordnet und das jeweils andere Bauteil mit dem Ventilkörper (15) in Verbindung steht.

2. Ventil nach Anspruch 1, **dadurch gekennzeichnet, dass** der Magnet (19) mit dem Nordpol (N) und zugleich dem Südpol (S) dem magnetischen Bauteil (18) gegenübersteht.

3. Ventil nach Anspruch 1 oder 2, **dadurch gekennzeichnet, dass** der Magnet (19) als Polymagnet mit mehreren Einzelmagneten (20) ausgebildet ist.

4. Ventil nach zumindest einem der Ansprüche 1 bis 3, **dadurch gekennzeichnet, dass** der Magnet (19) in einem Antriebsgehäuse (14) und das dem Magneten (19) gegenüberstehende magnetische Bauteil (18) in einem mit der Antriebswelle (14) mitbewegten Bauteil befestigt ist.

5. Ventil nach zumindest einem der Ansprüche 1 bis 4, **dadurch gekennzeichnet, dass** das das magnetische Bauteil (18) an einem Zahnrad (16) eines zwischen Antrieb (6) und Antriebswelle (14) angeordneten Getriebes (9) befestigt ist.

6. Ventil nach Anspruch 5, **dadurch gekennzeichnet, dass** das Zahnrad (16) des Getriebes (9) aus Kunststoff gefertigt ist.

7. Ventil nach Anspruch 5 oder 6, **dadurch gekennzeichnet, dass** das magnetische Bauteil (18) stoffschlüssig in dem Zahnrad (16) befestigt ist.

8. Ventil nach zumindest einem der Ansprüche 1 bis 7, **dadurch gekennzeichnet, dass** das magnetische Bauteil (18) ein Stahlblech ist.

9. Ventil nach zumindest einem der Ansprüche 1 bis 8, **dadurch gekennzeichnet, dass** dem Magneten (19) zwei voneinander beabstandete magnetische Bauteile (18, 18') gegenüberstehen.
